# EUROPÄISCHE PATENTANMELDUNG

(11) **EP 1 400 468 A1**
(43) Veröffentlichungstag der Anmeldung: **24.03.2004**
(21) Anmeldenummer: 03018163.0
(22) Anmeldetag: 08.08.2003
(51) Int. Cl.: B65G 15/60, B65G 39/10

(54) **Förderbahn für Stückgut, insbesondere für Gepäck-Behälter**

(30) Priorität: 17.09.2002 DE 10243117
(71) Anmelder: SIEMENS AKTIENGESELLSCHAFT, 80333 München (DE)
(72) Erfinder: Kuhn, Michael, 63512 Hainburg (DE)

(57) **Zusammenfassung**

Die Erfindung betrifft eine Förderbahn (1) für Stückgut, insbesondere für Gepäck-Behälter, mit mindestens zwei das Stückgut tragenden und voneinander beabstandeten sowie parallel in Förderrichtung (F) verlaufenden Förderern (2), von denen mindestens einer einen angetriebenen, endlos umlaufenden und über Umlenkräder (9) geführten Fördergurt (5) aufweist, von dem das Stückgut auf der Oberseite des Obertrums (7) abtragbar ist, mit zur Abstützung des Fördergurtes (5) zwischen den Umlenkrädern (9) in Förderrichtung (F) gesehen hintereinander angeordneten Tragrollen (4). Um den Verschleiß von Fördergurt (5) und Tragrolle (4) zu minimieren, wird vorgeschlagen, dass Antriebsmittel vorgesehen sind, welche sicherstellen, dass auch bei nicht auf der Tragrolle (4) aufliegendem Obertrum (7) die Umfangsgeschwindigkeit dieser Tragrolle (4) jeweils gleich der Laufgeschwindigkeit des Fördergurtes (5) ist.

## Beschreibung

Die Erfindung betrifft eine Förderbahn für Stückgut, insbesondere für Gepäck-Behälter, gemäß dem Oberbegriff des Anspruchs 1.

Aus der EP 0 802 129 B1 ist eine Förderbahn für Gepäck-Behälter bekannt, die zwei voneinander beabstandete, in Förderrichtung parallel verlaufende Förderer aufweist, auf denen die Gepäck-Behälter aufliegen, jeweils mit einer Seite auf dem einen und mit der anderen Seite auf dem anderen Förderer. Einer der Förderer verfügt über einen als Zahnriemen ausgebildeten endlos umlaufenden angetriebenen Fördergurt, der über Umlenkräder geführt ist. Zwischen den Umlenkrädern befinden sich mehrere hintereinander angeordnete Tragrollen, die während des Transports von Gepäck-Behältern den Fördergurt von unten abstützen. An der gezahnten Seite des Fördergurtes angeordnet befindet sich zur Führung ein sich in Parallelrichtung des Fördergurtes erstreckender Steg. Die Umlenkräder als auch die Tragrollen weisen je eine den Steg aufnehmende radiale Nut auf. Der andere Förderer ist mit freidrehbaren Laufrollen versehen, auf denen die Gepäck-Behälter jeweils aufliegen und abrollen können.

Weiter ist aus der DE 44 07 163 C1 eine Förderanlage für Paletten zum Abstellen von Kraftfahrzeugen bekannt, die ebenfalls im wesentlichen aus zwei parallel und mit Abstand zueinander verlaufenden Fördergurten zum Transport der Paletten besteht. Die Fördergurte sind jeweils endlos umlaufend ausgebildet und werden am Anfang und am Ende der Förderbahn über um horizontale Achsen drehbare Umlenkräder geführt, von denen je Fördergurt eines über einen Elektromotor angetrieben ist. Die Übertragung der Antriebskraft zwischen den Umlenkrädern und dem Fördergurt erfolgt reibschlüssig. Die Umlenkräder sind jeweils an den Enden von zwei parallel und in Förderrichtung verlaufenden Längsträgern gelagert.

Üblicherweise werden die Fördergurte vorgespannt, indem zumindest eines der beiden Umlenkräder horizontal verschiebbar gelagert ist. Diese Vorspannung stellt den erforderlichen Reibschluss für die Kraftübertragung zwischen dem angetriebenen Umlenkrad und dem Fördergurt sicher. Die unterhalb des Obertrums angeordneten Tragrollen können aufgrund von Fertigungstoleranzen einen Fluchtungsfehler aufweisen, d.h. die horizontale Flucht der Tragrollen ist dann nicht immer gegeben. Dies kann dazu führen, dass während des Betriebes das Obertrum des Fördergurtes ohne aufliegendem Gepäck-Behälter nicht an der Tragrolle anliegt, d.h. das Obertrum bewegt sich unter Bildung eines schmalen Spaltes kontaktlos über die Tragrolle hinweg, die dann aufgrund von Reibungsverlusten ihre Umdrehungsgeschwindigkeit verringert, gegebenenfalls bis zum Stillstand. Beim Einlaufen eines Gepäck-Behälters in den Bereich dieser Tragrolle wird der Fördergurt durch den Gepäck-Behälter an diese Tragrolle gedrückt und die Tragrolle wird unter Reibschluss beschleunigt, bis deren Umfangsgeschwindigkeit wieder der Laufgeschwindigkeit des Fördergurtes entspricht. Dies kann zu erhöhtem Verschleiß an der Tragrolle und dem Fördergurt führen. Beim Auslaufen des Gepäckbehälters aus dem Bereich der Tragrolle entsteht der gleiche Effekt wie beim Einlaufen. Der Verschleiß an Tragrolle und Fördergurt ist am größten, wenn die Tragrolle stillsteht und wieder auf die volle Laufgeschwindigkeit des Fördergurtes beschleunigt wird.

Der Erfindung liegt die Aufgabe zugrunde, eine Förderbahn für Gepäck-Behälter anzugeben, welche einen geringeren Verschleiß an Fördergurt und Tragrolle aufweist.

Diese Aufgabe wird durch die Merkmale des Anspruchs 1 gelöst. Vorteilhafte Ausgestaltungen der Förderbahn sind in den Unteransprüchen 2 bis 10 angegeben.

Die Lösung sieht vor, dass Antriebsmittel vorgesehen sind, welche sicherstellen, dass auch bei nicht auf der Tragrolle aufliegendem Obertrum die Umfangsgeschwindigkeit dieser Tragrolle jeweils gleich der Laufgeschwindigkeit des Fördergurtes ist. Für den Fall, dass eine Tragrolle und das Obertrum des unbeladenen Fördergurtes nicht aneinander anliegen, kommen beim Einlaufen des Gepäck-Behälters in den Bereich der Tragrolle jeweils immer die bereits mit "Laufgeschwindigkeit des Fördergurtes" rotierende Tragrolle und der sich bewegende Fördergurt in Kontakt. Aufgrund der gleichen Geschwindigkeiten ist die Relativgeschwindigkeit zueinander gleich null, so dass der Fördergurt ohne Gleitreibungsverluste unter Bildung eines Haftreibschlusses an die Tragrolle gepresst wird. Ein Beschleunigen der Tragrolle findet nicht mehr statt.

Konstruktiv einfache Antriebsmittel erhält man, wenn diese als parallel zu den Tragrollen angeordnete Andrückrollen ausgebildet sind, die das Untertrum jeweils von unten an die Tragrollen andrücken, wobei die den Tragrollen zugewandte Innenseite des Untertrums die Tragrollen reibschlüssig antreibt. Die Rotationsrichtung der Tragrollen entspricht dabei der Rotationsrichtung der Umlenkräder. Die Umfangsgeschwindigkeit der Tragrollen ist auf diese Weise jederzeit gleich der Laufgeschwindigkeit des Fördergurtes

Um den Andruck an die Tragrollen einfach einstellen zu können, ist jede Andrückrolle in Förderrichtung gesehen zwischen zwei Tragrollen angeordnet.

Indem jede Andrückrolle mit Überschneidung zur Tragrolle angeordnet ist, wird eine Führung des Untertrums hergestellt, die eine sichere Anlage der Innenseite des Untertrums an der Tragrolle erzielt.

Eine Überschneidung bei der die unterste vertikale Höhe des Umfangs einer Tragrolle 5 mm niedriger ist als die oberste vertikale Höhe des Umfangs der Andrückrolle erzielt eine optimale Wirkung.

Der Schlupf verringert sich, wenn als Fördergurt ein Zahnriemen verwendet wird.

Ein preiswerter Fördergurt ist gegeben, wenn als Fördergurt ein Flachriemen verwendet wird.

Der Antrieb der Tragrolle ist ebenso sichergestellt, wenn die Tragrolle als mit zu dem Zahnriemen korrespondierende Zahnrolle ausgebildet ist, wobei als Antriebsmittel die ineinandergreifenden Verzahnungen wirken. Der Spalt, der zwischen Tragrolle und Fördergurt entstehen kann und für den Verschleiß beider Elemente verantwortlich ist, kann überbrückt werden durch die hervorstehenden Zähne des Zahnriemens und der Zahnrolle. Die Zähne des Zahnriemens hintergreifen die korrespondierend ausgebildeten Zähne der Zahnrolle und treiben diese schlupffrei an.

Eine sichere seitliche Führung des Zahnriemens ist gegeben, wenn der Zahnriemen auf der gezahnten Seite einen aus der Oberfläche des Fördergurtes hervorstehenden Steg aufweist, der parallel zur Längserstreckung des Fördergurtes verläuft. Dieser Steg greift in eine zu dem Steg korrespondierende radiale Nut ein und verhindert somit das seitliche Verschieben.

Weitere Vorteile und Merkmale der Erfindung ergeben sich aus der folgenden Beschreibung anhand der Figuren. Dabei zeigen:
- Fig. 1: Draufsicht auf eine Förderbahn,
- Fig. 2: Seitenansicht der Förderbahn gemäß Fig. 1,
- Fig. 3: eine Schnittdarstellung der Förderbahn gemäß Fig. 2

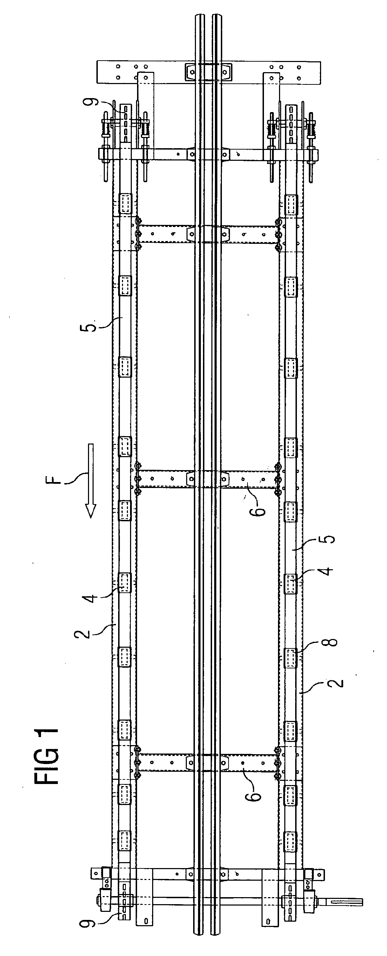

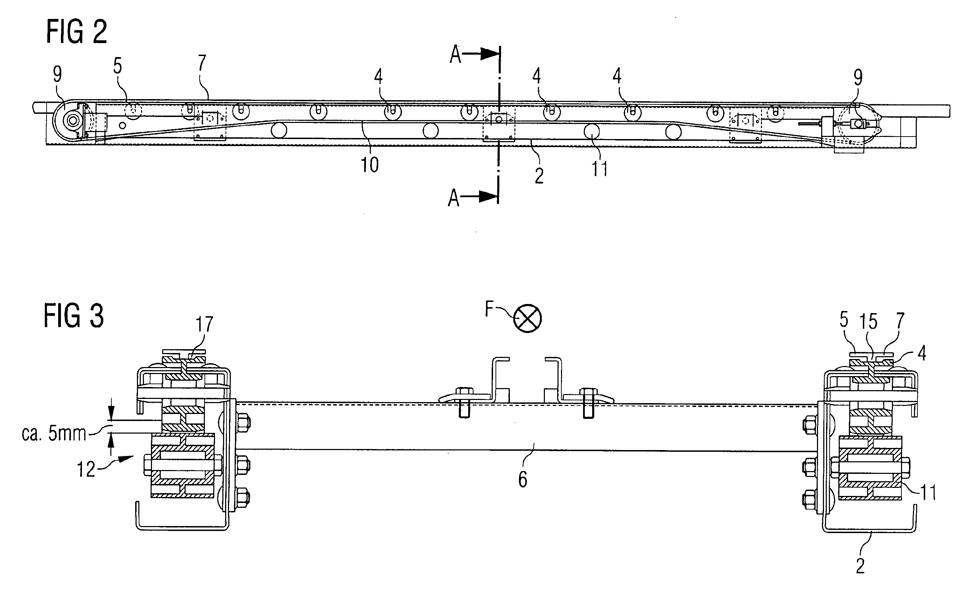

Fig. 1 zeigt eine Förderbahn 1 für Stückguter in einer Draufsicht. Die Förderbahn 1 ist durch zwei das Stückgut tragende und voneinander durch Quertraversen 6 beabstandete Förderer 2 ausgebildet, die parallel zur Förderrichtung F verlaufen. An den beiden Förderern 2 angeordnet ist ein endlos umlaufender Fördergurt 5, der als Flachriemen ausgebildet über Umlenkräder 9 geführt ist. An einem Umlenkrad 9 ist ein nicht dargestellter elektrischer Antrieb für den Fördergurt 5 angeschlossen. Der Fördergurt 5 weist ein Obertrum 7 und ein Untertrum 10 auf, wobei auf der Oberfläche des Obertrums 7 das Stückgut abtragbar ist. Jeder Förderer 2 ist im Querschnitt (s. Fig. 3) C-förmig ausgeführt und weist auf seiner dem Obertrum 7 des Fördergurtes 5 zugewandten Seite mehrere Öffnungen 8 auf, aus denen jeweils eine Tragrolle 4 herausragt. Die Drehachsen der Tragrollen 4 sind dabei parallel zu denen der Umlenkräder 9 angeordnet. In Förderrichtung F gesehen sind die Tragrollen 4 hintereinander gelagert. Die zwischen den Umlenkrädern 9 angeordneten Tragrollen 4 unterstützen während des Transportes von Stückgut das Obertrum 7 des Fördergurtes 5. Üblicherweise ist ihr Abstand zueinander und zu den Umlenkrädern geringer als die halbe Länge eines zu transportierenden Stückgutes.

In Fig. 2 ist die Förderbahn 1 gemäß Fig. 1 als Seitenansicht dargestellt. Am horizontal verlaufenden Förderer 2 sind die Tragrollen 4 zwischen den Umlenkrädern 9 in vertikaler Richtung angeordnet, wobei sie oben etwas aus den Öffnungen 8 des Förderers 2 herausragen. Zwischen den Umlenkrollen 9 fluchten die Auflagebereiche der Tragrollen 4 für den Fördergurt 5, so dass ein zu transportierendes Stückgut in einer Ebene abgetragen wird. Horizontal zwischen den Tragrollen 4 und parallel zu diesen angeordnet befinden sich als Antriebsmittel Andrückrollen 11, die das Untertrum 10 im Förderer 2 derart führen, dass dieses an der Unterseite an zumindest einer Tragrolle 4 anliegt. In vertikaler Richtung sind die Andrückrollen 11 so positioniert, dass ihr höchster Umfangspunkt oberhalb des untersten Umfangspunkts einer Tragrolle 4 liegt. Diese Überschneidung 12 führt zu einem leicht wellenlinienförmigen Verlauf des Untertrums 10.

Die erzwungene Führung des Untertrums 10 durch die Andrückrollen 11 bedingt das sichere Anliegen an den Tragrollen 4. Ein permanenter Antrieb der Tragrollen 4 ist somit gegeben, so dass ein verlustbehaftetes Beschleunigen der Tragrollen 4 durch das Obertrum 7 entfällt. Diese Anordnung ist anwendbar für Förderbahnen 1, die als Fördergurte 5 Flachriemen oder auch Zahnriemen verwenden, der auch einem umlaufenden Steg aufweisen kann.

Ein Schnitt gemäß der Schnittlinie A-A in Fig. 2 ist in Fig. 3 dargestellt. Die Quertraverse 6 verbindet und beabstandet die beiden Förderer 2 der Förderbahn 1. Am im Querschnitt C-förmigen Förderer 2 sind die Tragrollen 4 und die Andrückrollen 11 mit parallelen Drehachsen zueinander angeordnet. Unterhalb der Tragrolle 4 angeordnet ist eine Andrückrolle 11 mit einer Überschneidung 12 von 5 mm. Das zwischen der Tragrolle 4 und der Andrückrolle 11 verlaufende Untertrum 10 des Fördergurtes 5 liegt als zusätzliches Antriebsmittel der Tragrolle 4 von unten an dieser an. Aus dem Förderer 2 oben herausragend ist die Tragrolle 4 ersichtlich, die das Obertrum 7 des Fördergurtes 5 tragen soll.

Der Fördergurt 5 ist mit einem umlaufenden Steg 15 ausgeführt. Die Tragrollen 4 als auch die Umlenkräder 9 weisen eine radiale Nut 17 auf, in die der Steg 15 des Zahnriemens eingreift und aufliegt. Das seitliche Verschieben des Fördergurtes 5 gegenüber der Tragrolle 4 wird durch den Steg 15 des Fördergurtes 4 verhindert. Weiter ist der Fördergurt 5 auf der Stegseite mit Zähnen versehen, um diesen schlupffrei mittels eines der Umlenkräder 9 anzutreiben, die hierzu eine korrespondierende Zahnung aufweisen. Die Zähne des Fördergurtes 5 kommen mit den Umfangsflächen der Tragrollen 4 nicht in Kontakt.

Selbstverständlich kann der Fördergurt 5 auch als Zahnriemen ausgebildet sein. Die Zähne des Zahnriemens hintergreifen dabei die Zähne der dann als Zahnrollen (nicht dargestellt) ausgeführten Tragrollen 4 und treiben diese an. Diese bilden in diesem Fall die Antriebsmittel, die jederzeit die gewünschte Drehbewegung der Tragrollen 4 sicherstellen. Eine seitliche Führung des Zahnriemens mittels eines an der den Tragrollen 4 zugewandten Seite umlaufenden Steges 15 ist zusätzlich möglich. Dann müssen die Zahnrollen als auch die Umlenkräder 9 eine radiale Nut 17 aufweisen, in der der Steg 15 geführt wird.

## Patentansprüche

1. Förderbahn (1) für Stückgut, insbesondere für Gepäck-Behälter,
mit mindestens zwei das Stückgut tragenden und voneinander beabstandeten sowie parallel in Förderrichtung (F) verlaufenden Förderern (2) , von denen mindestens einer einen angetriebenen, endlos umlaufenden und über Umlenkräder (9) geführten Fördergurt (5) aufweist, von dem das Stückgut auf der Oberseite des Obertrums (7) abtragbar ist, mit zur Abstützung des Fördergurtes (5) zwischen den Umlenkrädern (9) in Förderrichtung (F) gesehen hintereinander angeordneten Tragrollen (4),
**dadurch gekennzeichnet,**
**dass** Antriebsmittel vorgesehen sind, welche sicherstellen, dass auch bei nicht auf der Tragrolle (4) aufliegendem Obertrum (7) die Umfangsgeschwindigkeit dieser Tragrolle (4) jeweils gleich der Laufgeschwindigkeit des Fördergurtes (5) ist.

2. Förderbahn nach Anspruch 1,
**dadurch gekennzeichnet,**
**dass** die Antriebsmittel als parallel zu den Tragrollen (4) angeordnete Andrückrollen (11) ausgebildet sind, die das Untertrum (10) jeweils von unten an die Tragrollen (4) reibschlüssig andrücken.

3. Förderbahn nach Anspruch 2,
**dadurch gekennzeichnet,**
**dass** jede Andrückrolle (11) in Förderrichtung (F) gesehen zwischen den Tragrollen (4) angeordnet ist.

4. Förderbahn nach Anspruch 3,
**dadurch gekennzeichnet,**
**dass** jede Andrückrolle (11) mit Überschneidung (12) zur Tragrolle (4) angeordnet ist.

5. Förderbahn nach Anspruch 4,
**dadurch gekennzeichnet,**
**dass** die Überschneidung (12) der Andrückrolle (11) zur Tragrolle (4) 5 mm beträgt.

6. Förderbahn nach einem der Ansprüche 1 bis 5,
**dadurch gekennzeichnet,**
**dass** der Fördergurt (5) als Flachriemen ausgebildet ist.

7. Förderbahn nach Anspruch 1,
**dadurch gekennzeichnet,**
**dass** der Fördergurt (5) als Zahnriemen ausgebildet ist.

8. Förderbahn nach Anspruch 1 und 7,
**dadurch gekennzeichnet,**
**dass** die Tragrollen (4) als zu dem Zahnriemen korrespondierende Zahnrollen ausgebildet sind, wobei als Antriebsmittel die ineinandergreifenden Verzahnungen den Antrieb der Tragrolle (4) jeweils sicherstellen.

9. Förderbahn nach Anspruch 7 oder 8,
**dadurch gekennzeichnet,**
**dass** der Zahnriemen auf der gezahnten Seite einen aus der Oberfläche des Fördergurtes (5) hervorstehenden Steg (15) aufweist, der parallel zur Längserstreckung des Fördergurtes (5) verläuft, wobei auf der ungezahnten Seite das Stückgut abtragbar ist.
